# EUROPÄISCHE PATENTSCHRIFT

(11) **EP 2 394 091 B1**
(45) Veröffentlichungstag und Bekanntmachung des Hinweises auf die Patenterteilung: **27.08.2014**
(21) Anmeldenummer: 10700206.5
(22) Anmeldetag: 07.01.2010
(51) Int. Cl.: F16M 5/00

(54) **TRAGELEMENT MIT EINER ANTRIEBSEINHEIT**
SUPPORT ELEMENT HAVING A DRIVE UNIT
ÉLÉMENT SUPPORT AVEC UNE UNITÉ D'ENTRAÎNEMENT

(30) Priorität: 04.02.2009 DE 102009007563
(43) Veröffentlichungstag der Anmeldung: 14.12.2011
(73) Patentinhaber: SEW-EURODRIVE GmbH & Co. KG, 76646 Bruchsal (DE)
(72) Erfinder: MEGERLE, Jürgen, 76694 Forst (DE); KOCH, Guido, 61440 Oberursel (DE)
(86) Internationale Anmeldenummer: PCT/EP2010/000037
(87) Internationale Veröffentlichungsnummer: WO 2010/089010

(56) Entgegenhaltungen:
- EP-A1- 0 006 116
- EP-A1- 1 584 548
- DE-B- 1 083 087
- US-A- 3 330 514

## Beschreibung

Die Erfindung betrifft ein Tragelement mit einer Antriebseinheit.

Aus der DE 10 2005 031 197 A1 und EP 0006116 sind Tragelemente ist ein Tragelement mit einer Antriebseinheit bekannt.

Der Erfindung liegt daher die Aufgabe zugrunde, ein Tragelement mit einer Antriebseinheit weiterzubilden.

Erfindungsgemäß wird die Aufgabe bei dem Tragelement nach den in Anspruch 1 angegebenen Merkmalen gelöst.

Wichtige Merkmale der Erfindung bei dem Tragelement mit einer Antriebseinheit sind, dass das Tragelement einen Hohlraum aufweist, wobei der Hohlraum mit einem Element der Antriebseinheit über Leitungen verbunden ist, so dass ein Kühlmittel des Elementes den Hohlraum durchströmt. Von Vorteil ist dabei, dass das Tragelement nicht nur seine tragende Funktion erfüllt, sondern gleichzeitig auch als Kühlelement eingesetzt ist.

Bei einer vorteilhaften Ausgestaltung weist das Tragelement eine Doppelwand auf, welche den Hohlraum bildet. Von Vorteil ist dabei, dass der Hohlraum unabhängig von der Tragfunktion an die benötigte Kühlleistung anpassbar ist.

Bei einer weiteren vorteilhaften Ausgestaltung umschließt das Tragelement ein durch eine erste Öffnung und eine zweite Öffnung von außen zugängliches Volumen und insbesondere ist in diesem Volumen oder in oder an der ersten oder zweiten Öffnung ein Lüfter angeordnet. Von Vorteil ist dabei, dass das Tragelement effektiver kühlbar ist.

Bei einer weiteren vorteilhaften Ausgestaltung umfassen die Leitungen eine Zuleitung und eine Ableitung, wobei ein Ende der Zuleitung in einem Endbereich des Tragelements angeordnet ist und ein Ende der Ableitung an einem gegenüberliegenden Endbereich des Tragelements angeordnet ist. Von Vorteil ist dabei, dass das Kühlmittel gezielt durch den verfügbaren Hohlraum leitbar ist.

Bei einer weiteren vorteilhaften Ausgestaltung ist an dem Hohlraum ein Ablasselement für das Kühlmittel angeordnet. Von Vorteil ist dabei, dass das Kühlmittel leicht austauschbar ist.

Bei einer weiteren vorteilhaften Ausgestaltung erhält ein Teil des Kühlmittels im Element durch interne Maschinenelemente eine höhere potentielle Energie und strömt auf Grund der Schwerkraft durch die Leitungen und den Hohlraum. Von Vorteil ist dabei, dass das Kühlmittel ohne weitere Vorrichtungen durch den Hohlraum gefördert wird.

Bei einer weiteren vorteilhaften Ausgestaltung pumpt eine Pumpe das Kühlmittel durch die Leitungen und den Hohlraum. Von Vorteil ist dabei, dass bei einer separat angetriebenen Pumpe auch bei stehendem Antrieb eine effektive Kühlung erreichbar ist, oder bei einer von einem Element des Antriebseinheit angetriebene Pumpe ein zuverlässiger Kühlmittel Transport gewährleistet ist.

Bei einer weiteren vorteilhaften Ausgestaltung umfasst die Antriebseinheit ein Getriebe, wobei das Element das Getriebe ist, und das Kühlmittel das Schmiermittel des Getriebes ist. Von Vorteil ist dabei, dass kein weiteres Kühlmittel nötig ist.

Bei einer weiteren vorteilhaften Ausgestaltung sind an einer Innenwand eines Getriebegehäuses Kanäle angeordnet, welche das Schmiermittel an ein Sammelelement leiten. Von Vorteil ist dabei, dass das Schmiermittel bzw. das Kühlmittel effektiv umgewälzt wird.

Bei einer weiteren vorteilhaften Ausgestaltung ist das Sammelelement mit der Zuleitung strömungstechnisch verbunden. Von Vorteil ist dabei, dass somit einfach das Kühlmittel durch den Hohlraum geleitet wird.

Bei einer weiteren vorteilhaften Ausgestaltung umfasst die Antriebseinheit einen Motor und eine Kupplung, wobei das Element der Motor oder die Kupplung ist. Von Vorteil ist dabei, dass auch ein Motor oder eine Kupplung kühlbar sind.

Bei einer weiteren vorteilhaften Ausgestaltung umfasst die Antriebseinheit einen Motor, eine Kupplung und ein Getriebe, wobei der Motor, die Kupplung und das Getriebe je ein Element bilden. Von Vorteil ist dabei, dass mehrere Elemente gleichzeitig effektiv kühlbar sind.

Bei einer weiteren vorteilhaften Ausgestaltung ist der Hohlraum in separate Hohlräume unterteilt, welche mit je einem Element über separate Leitungen strömungstechnisch verbunden sind. Von Vorteil ist dabei, dass unterschiedliche Kühlmittel einsetzbar sind und unterschiedliche Kühlleistungen durch Anpassung der separaten Hohlräume abführbar sind.

Bei einer weiteren vorteilhaften Ausgestaltung ist zwischen den separaten Hohlräumen eine Wärmesperre angeordnet. Von Vorteil ist dabei, dass unterschiedliche Belastungstemperaturen erreichbar sind.

Bei einer weiteren vorteilhaften Ausgestaltung ist das Tragelement als doppelwandiges Vierkantrohr mit abgerundeten Ecken ausgebildet, wobei sich gegenüberliegende Rohrenden des Vierkantrohrs je mit einer Deckelplatte verschlossen sind. Von Vorteil ist dabei, dass das Tragelement einfach zu fertigen ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 10: Tragelement
- 12: Zuleitung
- 14: Ableitung
- 16: Befestigungselement
- 18: Ablasselement
- 20: Antriebseinheit
- 22: Motor
- 24: Kupplung
- 26: Lüfter
- 28: Getriebe
- 30: Hilfsantrieb

Die Erfindung wird nun anhand von Ausführungsbeispielen mit Bezugnahme auf die Zeichnung näher erläutert. Es zeigen rein schematisch:

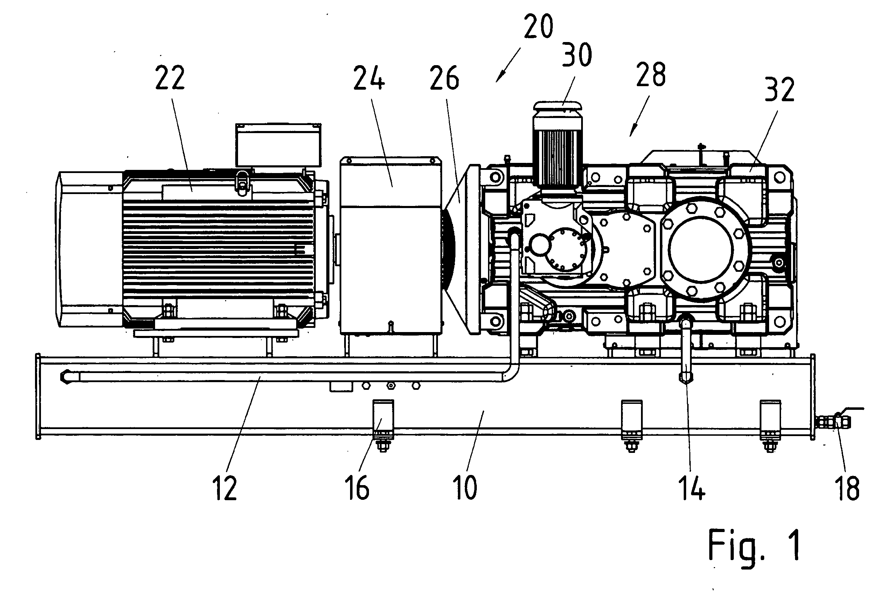

- Figur 1: eine Seitenansicht eines erfindungsgemäßen Tragelements mit einer Antriebeinheit.

Figur 1 zeigt ein erfindungsgemäßes Tragelement 10 mit einer Antriebseinheit 20. Die Antriebseinheit 20 umfasst einen Motor 22, eine Kupplung 24 und ein Getriebe 28 mit einem Lüfter 26. Der Motor 22 treibt über die Kupplung 24 das Getriebe 28 an. Bei laufendem Getriebe 28 dreht sich gleichzeitig der Lüfter 26. Der bekannte Stand der Technik benutzt den Lüfter 26, um das Getriebe 28 zu kühlen. Das Getriebe 28 umfasst ein Getriebegehäuse 32 und in dieser speziellen Ausführung einen Hilfsantrieb 30. Der Motor 22, die Kupplung 24 und das Getriebe 28 sind fest aber lösbar mit dem Tragelement 10 verbunden. Ein solches Tragelement 10 wird auch als Motorrahmen oder Motorschwinge bezeichnet.

Das Tragelement 10 ist als Vierkantrohr oder vierkantiger Hohlstahlträger ausgeführt, dessen Enden durch Stahlplatten verschlossen, meist verschweißt sind.

Bei dem in Figur 1 gezeigten, speziellen Ausführungsbeispiel ist ein Getriebegehäuse 32 des Getriebes 28 über Leitungen, insbesondere eine Zuleitung 12 und eine Ableitung 14 mit einem Hohlraum des Tragelementes 10 verbunden. Die Zuleitung 12 und die Ableitung 14 sind als Rohrleitungen ausgeführt. Es sind natürlich auch Schläuche oder andere flüssigkeitsführende Elmente einsetzbar.

Das Getriebegehäuse ist bis zu einem vordefinierten Niveau mit einem Schmieröl oder Ölersatzstoff als Kühl- und Schmiermittel befüllt. Das Schmieröl wird durch die Bewegung von Zahnrädern des Getriebes 28 erwärmt und an eine Innenfläche des Getriebegehäuses 32 gespritzt. Auffangkanäle an der Innenfläche leiten das Schmieröl in ein Sammelelement im Gehäuse 32, welches mit dem Ende der Zuleitung 12 verbunden ist. Alternativ oder Zusätzlich sind Abstreifer an den Zahnrädern angeordnet, welche das Schmieröl abstreifen und der Sammelstelle zuführen. So wird das Schmieröl durch die Schwerkraft durch die Zuleitung 12 in den Hohlraum des Tragelementes 10 geleitet. Dann fließt das Schmieröl durch den Hohlraum und über die Ableitung 14 wieder zurück in das Gehäuse 32. Außenflächen des Hohlraums des Tragelementes 10 wirken dabei als Konvektionsflächen und das Schnieröl kann effektiv seine Wärme abgeben.

Alternativ lässt sich das Schmieröl auch über eine Wellenendpumpe, welche zum Beispiel anstelle des Hilfsantriebs 30 am Getriebe 28 angeordnet ist, aktiv durch den Hohlraum pumpen.

Zum Austausch des Schmieröls ist am Tragelement in Verbindung mit dessen Hohlraum ein als Ölablasshahn ausgeführtes Ablasselement 18 angeordnet.

Der Hohlraum im Tragelement 10 ist durch eine doppelwandige Ausführung des Tragelementes 10 realisierbar. Im Hohlraum sind zusätzliche Zwischenwände anordbar, so dass das Schmieröl mäandrierend durch den Hohlraum geleitet wird. Somit ist der Lüfter 26 auch weglassbar. Dies ist bei staubigen Einsatzumgebungen der Antriebseinheit von Vorteil.

Da das Tragelement eine einfache Struktur aufweist ist eine Oberfläche des Tragelementes 10 im Vergleich zu einer Oberfläche des Getriebegehäuses 32 einfacher glatt auszuführen, so dass diese Oberfläche nicht so schnell verdreckt und leichter reinigbar ist. Dies erhöht die Wärmeabstrahlung an der Oberfläche und somit die Entwärmung des Getriebes.

In einer alternativen Ausführungsform sind die Zuleitung und die Ableitung zwischen dem Getriebegehäuse 32 und dem Tragelement 10 angeordnet, so dass praktisch nur eine Vergrößerung eines im Getriebegehäuse 32 vorhandenen Schmierölreservoirs gebildet ist.

Die Zuleitung ist aber auch durch den im Tragelement 10 vorhanden Hohlraum führbar und ist dann von Außen kaum sichtbar.

In einer alternativen Ausführungsform ist auch der Motor 22 oder die Kupplung 24 über das Tragelement kühlbar. Dazu ist dann das Kupplungsöl der als Hydraulikkupplung ausgeführten Kupplung durch den Hohlraum über Leitungen führbar. Bei einer Motorkühlung ist als Kühlmittel auch ein inertes Gas nutzbar, welches durch den Hohlraum pumpbar ist. Dies ist insbesondere für explosionsgeschützte Antriebe von Vorteil. Wird das Kühlmittel des Motors aktiv durch den Hohlraum geleitet, lässt sich auch ein Motor, welcher ein großes Haltemoment aufbringen muss, effektiv kühlen.

Des Weiteren lassen sich auch in einer anderen Ausführungsform der Erfindung alle drei Elemente der Antriebseinheit über das Tragelement 10 kühlen. Beliebig viele, insbesondere voneinander thermisch getrennter Hohlräume können im Tragelement angeordnet sein.

Bei einer weiteren Ausführungsform sind die Deckel des doppelwandigen Vierkantstahlträgers des Tragelementes 10 als Ring ausgeführt, so dass ein Volumen im Tragelement von einer inneren Wand des doppelwandigen Vierkantstahlträgers des Tragelementes 10 zumindest teilweise umschlossen ist. Dieses Volumen ist durch zwei Öffnungen an den Enden des Vierkantstahlträgers zugänglich. Die innere Wand dient als weitere Konvektionsfläche. Vorzugsweise ist ein Lüfter in diesem Volumen oder an einem offenen Ende des Volumens angebracht, welcher die Kühlleistung nachmals erhöht.

## Patentansprüche

1. Tragelement (10) mit einer Antriebseinheit (20),
wobei das Tragelement (10) einen Hohlraum aufweist,
**dadurch gekennzeichnet, dass**
der Hohlraum mit einem Element der Antriebseinheit über Leitungen verbunden ist, so dass ein Kühlmittel des Elementes den Hohlraum durchströmt,
wobei das Tragelement (10) eine Doppelwand aufweist, welche den Hohlraum bildet, wobei an dem Hohlraum ein Ablasselement (18) für das Kühlmittel angeordnet ist.

2. Tragelement (10) nach einem der vorherigen Ansprüche,
**dadurch gekennzeichnet, dass**
das Tragelement (10) ein durch eine erste Öffnung und eine zweite Öffnung von außen zugängliches Volumen umschließt und insbesondere in diesem Volumen oder in oder an der ersten oder zweiten Öffnung ein Lüfter angeordnet ist.

3. Tragelement (10) nach einem der vorherigen Ansprüche,
**dadurch gekennzeichnet, dass**
die Leitungen eine Zuleitung (12) und eine Ableitung (14) umfassen,
wobei ein Ende der Zuleitung (12) in einem Endbereich des Tragelements (10) angeordnet ist und ein Ende der Ableitung (14) an einem gegenüberliegenden Endbereich angeordnet ist.

4. Tragelement (10) nach einem der vorherigen Ansprüche,
**dadurch gekennzeichnet, dass**
das Kühlmittel im Element durch interne Maschinenelemente eine höhere potentielle Energie erhält und auf Grund der Schwerkraft durch die Leitungen und den Hohlraum strömt.

5. Tragelement (10) nach einem der Ansprüche 1 bis 3,
**dadurch gekennzeichnet, dass**
eine Pumpe das Kühlmittel durch die Leitungen und den Hohlraum pumpt.

6. Tragelement (10) nach einem der vorherigen Ansprüche,
**dadurch gekennzeichnet, dass**
die Antriebseinheit (10) ein Getriebe (28) umfasst,
wobei das Element das Getriebe (28) ist, und das Kühlmittel das Schmiermittel des Getriebes (28) ist.

7. Tragelement (10) nach Anspruch 6,
**dadurch gekennzeichnet, dass**
an einer Innenwand eines Getriebegehäuses Kanäle angeordnet sind, welche das Schmiermittel an ein Sammelelement leiten.

8. Tragelement (10) nach Anspruch 6 und 2,
**dadurch gekennzeichnet, dass**
das Sammelelement mit der Zuleitung (12) strömungstechnisch verbunden ist.

9. Tragelement (10) nach einem der Ansprüche 1 bis 7,
**dadurch gekennzeichnet, dass**
die Antriebseinheit einen Motor (22) und eine Kupplung (24) umfasst,
wobei das Element der Motor (22) oder die Kupplung (24) ist.

10. Tragelement (10) nach einem der Ansprüche 1 bis 7,
**dadurch gekennzeichnet, dass**
die Antriebseinheit einen Motor (22), eine Kupplung (24) und ein Getriebe (28) umfasst, wobei der Motor (22), die Kupplung (24) und das Getriebe (28) je ein Element bilden.

11. Tragelement (10) nach Anspruch 10,
**dadurch gekennzeichnet, dass**
der Hohlraum in drei separate Hohlräume unterteilt ist, welche mit je einem Element über separate Leitungen strömungstechnisch verbunden sind.

12. Tragelement (10) nach Anspruch 11,
**dadurch gekennzeichnet, dass**
zwischen den separaten Hohlräumen eine Wärmesperre angeordnet ist.

13. Tragelement (10) nach einem der vorherigen Ansprüche,
**dadurch gekennzeichnet, dass**
das Tragelement (10) als doppelwandiges Vierkantrohr mit abgerundeten Ecken ausgebildet ist, wobei sich gegenüberliegende Rohrenden des Vierkantrohrs je mit einer Deckelplatte verschlossen sind.

## Claims

1. A supporting element (10) having a drive unit (20),
wherein the supporting element (10) has a cavity,
**characterised in that**
the cavity is connected via lines to an element of the drive unit, so that a coolant of the element flows through the cavity,
wherein the supporting element (10) has a double wall which forms the cavity, wherein a discharge element (18) for the coolant is arranged at the cavity.

2. A supporting element (10) according to any one of the preceding claims,
**characterised in that**
the supporting element (10) encloses a volume accessible from the exterior by a first opening and a second opening and a fan is arranged in particular in this volume or in or at the first or second opening.

3. A supporting element (10) according to any one of the preceding claims,
**characterised in that**
the lines comprise a feed line (12) and a discharge line (14),
wherein one end of the feed line (12) is arranged in an end region of the supporting element (10) and one end of the discharge line (14) is arranged at an opposite end region.

4. A supporting element (10) according to any one of the preceding claims,
**characterised in that** the coolant in the element obtains a higher potential energy through internal machine elements and flows through the lines and the cavity due to gravity.

5. A supporting element (10) according to any one of claims 1 to 3,
**characterised in that** a pump pumps the coolant through the lines and the cavity.

6. A supporting element (10) according to any one of the preceding claims,
**characterised in that** the drive unit (20) comprises gearing (28),
wherein the element is the gearing (28) and the coolant is the lubricant of the gearing (28).

7. A supporting element (10) according to claim 6,
**characterised in that**
channels are arranged at an inside wall of a gear housing and lead the lubricant to a collecting element.

8. A supporting element (10) according to claim 6 and 2,
**characterised in that**
the collecting element is connected to the feed line (12) in flow terms.

9. A supporting element (10) according to any one of claims 1 to 7,
**characterised in that**
the drive unit comprises a motor (22) and a clutch (24),
wherein the element is the motor (22) or the clutch (24).

10. A supporting element (10) according to any one of claims 1 to 7,
**characterised in that**
the drive unit comprises a motor (22), a clutch (24) and gearing (28),
wherein the motor (22), the clutch (24) and the gearing (28) each form an element.

11. A supporting element (10) according to claim 10,
**characterised in that**
the cavity is divided into three separate cavities each connected in flow terms to a respective element via separate lines.

12. A supporting element (10) according to claim 11,
**characterised in that** a thermal barrier is arranged between the separate cavities.

13. A supporting element (10) according to any one of the preceding claims,
**characterised in that**
the supporting element (10) is in the form of a double-walled rectangular pipe with rounded corners, wherein opposite pipe ends of the rectangular pipe are each closed by a cover plate.

## Revendications

1. Elément support (10) avec une unité d'entraînement,
sachant que l'élément support (10) présente une cavité,
**caractérisé en ce que** la cavité est reliée à un élément de l'unité d'entraînement par l'intermédiaire de conduites, de sorte qu'un fluide de refroidissement de l'élément passe dans la cavité,
sachant que l'élément support (10) présente une double paroi qui forme la cavité, sachant qu'un élément de vidange (18) pour le fluide de refroidissement est disposé sur la cavité.

2. Elément support (10) selon la revendication 1, **caractérisé en ce que** l'élément support (10) enferme un volume accessible de l'extérieur par une première ouverture et une deuxième ouverture, et une soufflante est notamment disposée dans ce volume, ou dans ou sur la première ou deuxième ouverture.

3. Elément support (10) selon l'une des revendications précédentes, **caractérisé en ce que** les conduites comprennent une conduite d'alimentation (12) et une conduite d'évacuation (14),
sachant qu'une extrémité de la conduite d'alimentation (12) est disposée dans une région terminale de l'élément support (10) et qu'une extrémité de la conduite d'évacuation (14) est disposée dans une région terminale opposée.

4. Elément support (10) selon l'une des revendications précédentes, **caractérisé en ce que** le fluide de refroidissement présent dans l'élément reçoit une énergie potentielle accrue par des éléments internes de machine et s'écoule par les conduites et la cavité en raison de la gravité.

5. Elément support (10) selon l'une des revendications 1 à 3, **caractérisé en ce qu'**une pompe refoule le fluide de refroidissement dans les conduites et la cavité.

6. Elément support (10) selon l'une des revendications précédentes, **caractérisé en ce que** l'unité d'entraînement (20) comprend un mécanisme de transmission (28),
sachant que l'élément est le mécanisme de transmission (28) et le fluide de refroidissement est le lubrifiant de la transmission (28).

7. Elément support (10) selon la revendication 6, **caractérisé en ce que** des canaux qui dirigent le lubrifiant vers un élément collecteur sont disposés sur une paroi intérieure d'un carter de transmission.

8. Elément support (10) selon les revendications 6 et 2, **caractérisé en ce que** l'élément collecteur est fluidiquement relié à la conduite d'alimentation (12).

9. Elément support (10) selon l'une des revendications 1 à 7, **caractérisé en ce que** l'unité d'entraînement comprend un moteur (22) et un embrayage (24), sachant que l'élément est le moteur (22) ou l'embrayage (24).

10. Elément support (10) selon l'une des revendications 1 à 7, **caractérisé en ce que** l'unité d'entraînement comprend un moteur (22), un embrayage (24) et un mécanisme de transmission (28),
sachant que le moteur (22), l'embrayage (24) et le mécanisme de transmission (28) constituent chacun un élément.

11. Elément support (10) selon la revendication 10, **caractérisé en ce que** la cavité est subdivisée en trois cavités séparées, qui sont fluidiquement reliées à un élément respectif par l'intermédiaire de conduites séparées.

12. Elément support (10) selon la revendication 11, **caractérisé en ce qu'**une barrière thermique est disposée entre les cavités séparées.

13. Elément support (10) selon l'une des revendications précédentes, **caractérisé en ce que** l'élément support (10) est réalisé sous forme de tube carré à double paroi et à coins arrondis, sachant que les extrémités opposées du tube carré sont chacune fermées par une plaque de couvercle.
